# EUROPÄISCHE PATENTSCHRIFT

(11) **EP 0 620 171 B1**
(45) Veröffentlichungstag und Bekanntmachung des Hinweises auf die Patenterteilung: **04.06.1997**
(21) Anmeldenummer: 93810263.9
(22) Anmeldetag: 14.04.1993
(51) Int. Cl.: B65G 49/06, B07C 5/04, B65G 1/04

(54) **Anlage zum Sortieren von Plattenmaterial**
Apparatus for sorting sheet material
Installation pour ranger des matériaux en feuilles

(43) Veröffentlichungstag der Anmeldung: 19.10.1994
(73) Patentinhaber: Bystronic Maschinen AG, CH-4922 Bützberg (CH)
(72) Erfinder: Zumstein, Ernst, CH-3400 Burgdorf (CH)
(74) Vertreter: AMMANN PATENTANWAELTE AG BERN

(56) Entgegenhaltungen:
- EP-A- 0 048 334

## Beschreibung

Die vorliegende Erfindung betrifft eine Anlage zum Sortieren von Plattenmaterial, insbesondere beim Vorbereiten und Zuführen sortierter Glasscheiben zu einer Weiterbearbeitungsanlage, gemäss Oberbegriff des Anspruchs 1. Eine solche Anlage ist beispielsweise bekannt aus der EP-B-0 048 334. Solche Anlagen dienen z.B. der zentralgesteuerten Fertigung insbesondere von Gruppen bestimmter Glasscheiben. Solche Gruppen von Glasscheiben entsprechen einer bestimmten Bestellung für eine bestimmte Verglasung, und es ist erforderlich, die ganze Anlage einschliesslich der erwähnten Weiterbearbeitungsanlage so zu programmieren und zentral zu steuern, dass grosse Zahlen von Glasscheiben in der richtigen Reihenfolge sortiert zugeführt und bearbeitet werden. Hierzu dient insbesondere die Sortieranlage, deren Sortierwagen die rohen Glasscheiben aufnimmt und in vorbestimmte Fächer eines oder mehrerer Fächerwagen überführt.

Bei der erwähnten bekannten Anlage ist eine ortsfeste Förderanlage vorgesehen, um vorbereitete Glasscheiben in den Sortierwagen einzuführen, und mit dem Sortierwagen ist eine fahrbare Fördervorrichtung verbunden, um Glasscheiben aus dem Sortierwagen in Fächerwagen überzuführen. Diese Ausführung ist aufwendig und erlaubt keine optimale, schonende Förderung der Glasscheiben. Ausserdem beanspruchen die beiden Fördervorrichtungen, die beide ausserhalb der die Glasscheiben aufnehmenden Fächer des Sortierwagens liegen, verhältnismässig viel Raum.

Ziel vorliegender Erfindung ist es, die bekannte Anlage zu vereinfachen und eine optimale Förderung und Handhabung der Platten, z.B. Glasscheiben, zu ermöglichen. Dieses Ziel wird gemäss Kennzeichen des Anspruchs 1 erreicht. Vorzugsweise weist die Fördervorrichtung eine verschiebbare Zange zur Erfassung eines Plattenrandes auf. Diese Zange ist innerhalb des Laderaumes des Sortierwagens angeordnet, sodass die Fördervorrichtung keinen zusätzlichen Raum beansprucht. Wie noch näher erläutert wird, gestattet diese erfindungsgemässe Ausführung auch eine optimale, schonende Handhabung der Platten, insbesondere Glasscheiben.

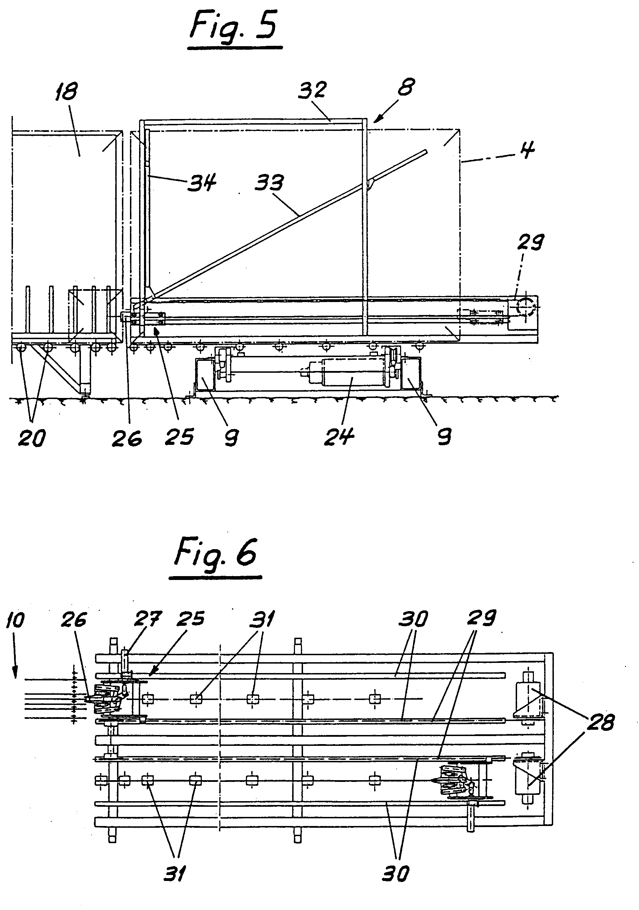

Eine bevorzugte Lösung von besonderer Bedeutung beschreibt der Anspruch 4. Wie noch erläutert wird, kann eine Aufstellvorrichtung gemäss Figur 5 in der Anlage an verschiedenen Stellen eingesetzt werden, um Platten, insbesondere Glasscheiben, berührungsfrei in etwa vertikaler Lage zu halten. Diese berührungsfreie Halterung der Platten hat nicht nur den Vorteil, dass Beschädigungen, z.B. der feinen Beschichtung von Glasscheiben, vermieden werden, sondern dass die Platten auch problemlos durch geeignete Fördermittel, insbesondere die erwähnte Zange, erfasst und weitertransportiert werden können.

In den abhängigen Ansprüchen sind weitere bevorzugte Ausführungsmöglichkeiten angegeben.

Die Erfindung wird nun anhand eines, in der Zeichnung dargestellten, Ausführungsbeispiels zum Sortieren von Glasscheiben näher erläutert.
Figur 1 zeigt eine schematische Uebersicht über die Sortiervorrichtung der Anlage,
Figuren 2 - 4 zeigen eine Aufstellvorrichtung, die Bestandteil der Sortiervorrichtung ist,
Figuren 5 und 6 zeigen schematisch den Sortierwagen,
Figuren 7 und 8 zeigen eine Station zur Ergänzung der Fächerwagen mit Spezialgläsern,
Figuren 9 und 10 zeigen die Ueberführung von Glasscheiben aus einem Fächerwagen in eine Weiterbearbeitungsanlage und
Figur 11 zeigt schematisch eine Ausführungsvariante.

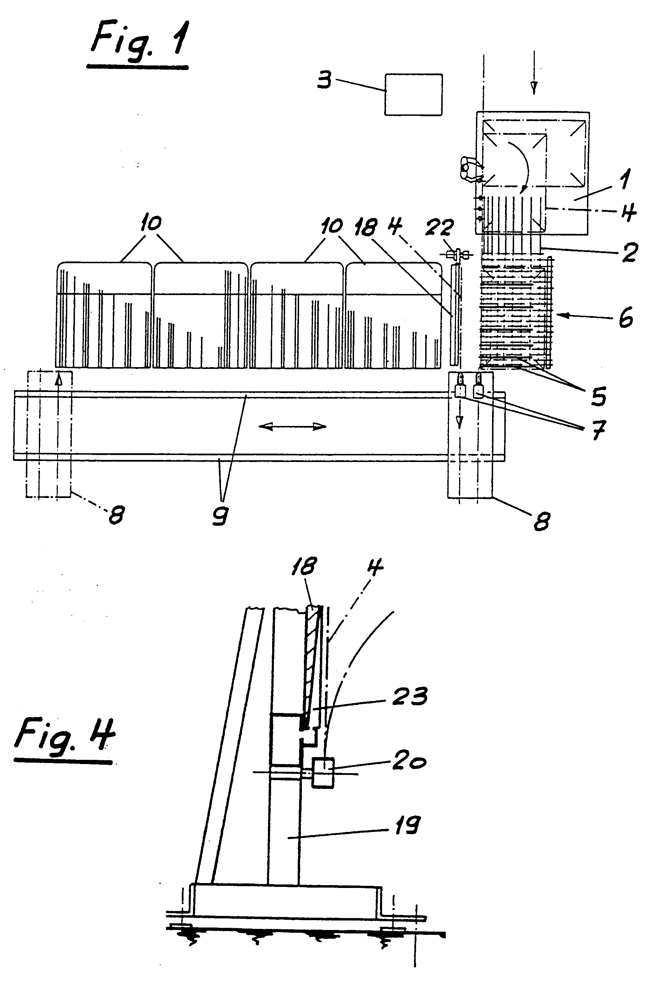

Der in Figur 1 schematisch dargestellte Teil der Anlage dient dem Vorbereiten und Sortieren der einzelnen Glasscheiben. Auf einem anhebbaren Luftkissentisch 1 werden nach einem bestimmten Plan geschnittene Glasscheiben gebrochen, nötigenfalls die einzelnen Scheiben in der in Figur 1 angedeuteten Weise gedreht, so dass sie den Tisch 1 über einen Riementransport 2 in Längsrichtung verlassen, und Abfälle werden in einen Behälter 3 geworfen. Bezüglich des Schneidplans wird beispielsweise auf das oben erwähnte Patent verwiesen. Vorzugsweise ist auf der der Bedienungsperson gegenüberliegenden Seite des Tisches 1 ein Monitor angebracht, auf welchem der Schneidplan und die erforderlichen Angaben über die Reihenfolge der abzuführenden Glasscheiben angezeigt werden.

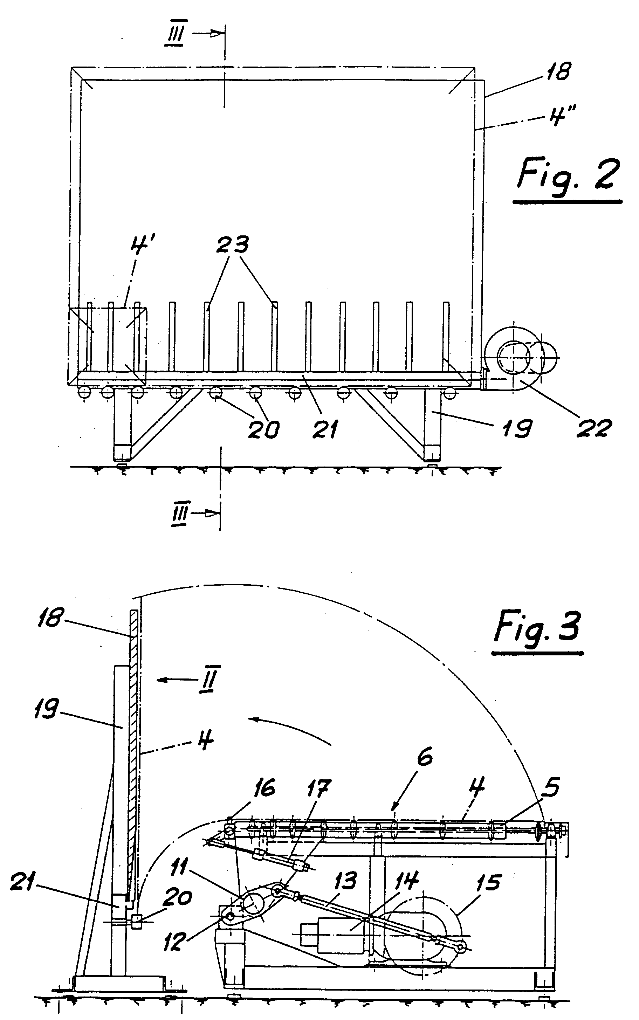

Der Riementransport 2 fördert die einzelnen, vorbereiteten Glasscheiben, beispielsweise die in Figur 1 angedeutete Glasscheibe 4 auf den schwenkbaren Stützrost 5 einer Aufstellmaschine 6. Diese Aufstellmaschine wird anhand der Figuren 2 und 3 später eingehender erläutert.

Durch die Aufstellmaschine 6 werden die hier in horizontaler Position zugeführten Glasscheiben in vertikale Position gebracht und dann mittels Zangen 7 in einen Sortierwagen 8 eingezogen. Dieser Sortierwagen 8 hat zwei Zangen 7 und entsprechend 2 Fächer zur Aufnahme je einer Glasscheibe 4, wobei der Sortierwagen 8 jeweils in diejenige Position gebracht wird, in der eine seiner Zangen eine Glassscheibe 4 erfassen und einziehen kann. Der Sortierwagen 8 ist, wie in Figur 1 angedeutet, längs einer Führung 9 verschiebbar, um einzelne Glasscheiben in Fächerwagen 10 überzuführen. Die dargestellte Anlage weist vier Fächerwagen 10 auf, welche in genau definierter Position längs der Führungsbahn 9 aufgestellt werden können. Jeder Fächerwagen weist beispielsweise 100 Fächer zur Aufnahme von 100 Glasscheiben auf, sodass bis zu 400 Glasscheiben sortiert und gemäss dem vorgegebenen Programm in die einzelnen Fächer der Fächerwagen verteilt werden können. In Figur 1 ist angedeutet, dass die Fächer der Fächerwagen 10 nur teilweise mit Glasscheiben besetzt sind. Wie später noch eingehender erläutert wird, werden die Fächerwagen 10 im allgemeinen nicht in der Sortierstation gemäss Figur 1 voll mit Glasscheiben besetzt, sondern es bleiben im allgemeinen gewisse Fächer dieser Wagen unbesetzt und werden nachträglich durch manuell oder maschinell zugeführte Spezialgläser ergänzt.

Die Figuren 2 - 4 zeigen die Aufstellmaschine 6, wobei Figur 2 eine Ansicht II in Figur 3, Figur 3 ein schematischer Schnitt nach Linie III-III in Figur 2 und Figur 4 ein Ausschnitt aus Figur 3 in grösserem Massstab ist. Der schwenkbare Rost 5 ist mit einem Hebel 11 verbunden, welcher um eine Schwenkachse 12 schwenkbar ist und an welchem die Kurbelstange 13 eines durch einen Motor 14 angetriebenen Kurbeltriebes 15 verschwenkt werden kann. Am Rost 5 ist ein schwenkbarer Anschlag 16 angebracht, welcher normalerweise in der dargestellten, wirksamen Stellung ist, jedoch mittels eines pneumatischen Zylinders 17 verschwenkt und ausgerückt werden kann. Tatsächlich handelt es sich nicht um einen einzigen Anschlag 16, sondern um eine Reihe von zahnförmigen Anschlägen, die auf einer schwenkbaren Leiste angebracht sind und die geeignet sind, eine auf dem Rost 5 liegende Glasscheibe 4 auf ihrer Länge abzustützten, wenn der Rost 5 in Richtung des Pfeils in Figur 3 hochgeschwenkt wird. Das Hochschwenken der Glasscheibe 4 erfolgt dabei gegen eine Wand 18, die an einem Gestell 19 befestigt ist. Unterhalb dieser Wand befindet sich eine Reihe von Stützrollen 20, auf welche die Glasscheibe 4 abgestützt werden kann (Figur 3). Wenn die Glasscheibe hochgeschwenkt wird, wird sie durch die Anschläge 16 gestützt, bis sie auf den Stütztrollen 20 aufliegt, und dann werden die Anschläge 16 ausgerückt. Unterhalb der Stützwand 18 befindet sich ein Luftkanal 21, dem durch ein Gebläse 22 Luft zugeführt werden kann, die dann durch einzelne, sich keilartig verjüngende Nuten 23 zwischen der Stützwand 18 und einer vor ihr stehenden Glasscheibe 4 nach oben austreten kann. Es wird damit zwischen der Stützwand 18 und der vor ihr stehenden Glasscheibe 4 ein Luftvorhang aufgebaut, welcher die Glasscheibe weitgehend unabhängig von ihrer Grösse in einem bestimmten Abstand von der Stützwand 18 in vertikaler Position hält. In Figur 2 ist angedeutet, dass von den kleinsten Glasscheiben 4' bis zu den grössten 4'' alle in aufgerichteter Position gehalten werden können. Die Stützwand 18 mit dem Gebläse 22 und dem Kanal 21 wird in der Folge einfach als Luftkissenwand bezeichnet.

Die Glasscheiben 4 laufen bei ihrer Ueberführung vom Tisch 1 auf den Rost 5 gegen nicht dargestellte Endanschläge dieses Rostes an, sodass ihre Vorderkante auch in der aufgerichteten Position gemäss den Figuren 2 bis 4 in einer bestimmten Position stehen. In Figur 2 ist angedeutet, dass die Vorderkanten der Glasscheiben 4' und 4'' unabhängig von ihrer Grösse dieselbe Position einnehmen. Es ist dies eine wesentliche Voraussetzung für die Uebernahme der Glasscheiben aus der Aufstellmaschine in den Sortierwagen 8. Dieser Sortierwagen ist in den Figuren 5 und 6 dargestellt. Wie erwähnt, ist der Sortierwagen längs den Führungsprofilen 9 fahrbar und kann in dieser Richtung durch den Motor 24 genau positioniert werden, um Glasscheiben aus der Aufstellmaschine zu übernehmen oder Glasscheiben in ein Fach eines Fächerwagens 10 einzuschieben. Diese Uebernahme bzw. dieses Einschieben erfolgt durch je eine Zange 25, deren Konstruktion in Figur 6 angedeutet, aber nicht näher beschrieben ist. Die eigentlichen Greifer 26 der Zange können mittels eines pneumatischen Zylinders 27 geöffnet und geschlossen werden, wobei die Zangenbewegung durch angedeutete Parallelogramme parallel geführt ist. Die Greifflächen der Zange sind mit weichem, gut haftendem Material belegt, damit die Zange die erforderliche Kraft zum Herausziehen, bzw. Einschieben auch der grössten Glasscheiben aufbringt. Die Zange 25 ergreift die Glasscheiben nur am äussersten Rand auf eine Tiefe von beispielsweise 12 mm, wo eine gewisse Verletzung der Scheibenbeschichtung in Kauf genommen werden kann, weil in diesem Bereich die Glasscheiben ohnehin nachbearbeitet werden. Die beiden Zangen können mittels Antriebsmotoren 28 und Ketten 29 längs Führungen 30 verschoben werden, und zwar je über einer Reihe von Rollen 31, auf welchen die Glasscheiben 4 beim Einziehen bzw. Ausstossen, mit ihrer Unterkante rollen. Zur seitlichen Stützung der Glasscheiben 4 im Sortierwagen 8 sind an Rahmen 32 mit Nylonbürsten besetzte Leisten 33 und 34 befestigt. Zwischen diesen Bürsten sind die Glasscheiben in aufrechter Lage gehalten und können nicht beschädigt werden, auch wenn der Sortierwagen zum Ueberführen von Glasscheiben in die Fächerwagen 10 verhältnismässig stark beschleunigt oder verzögert wird. Die Zustellbewegung des Sortierwagens muss mit hoher Präzision erfolgen, zu welchem Zwecke vorzugsweise an den Führungen 9 Zahnstangen angebracht sind, in welche durch den Motor 24 angetriebene Ritzel eingreifen.

Wenn der Sortierwagen 8 mit einem seiner Fächer, bzw. seiner Zangen 7, welche während der Zustellung des Sortierwagens 8 längs den Führungen 9 die Glasscheibe festhalten, vor dem zutreffenden Fach eines Fächerwagens 10 angelangt und positioniert ist, wird die Glasscheibe mittels der Zange 7 aus dem Sortierwagen 8 ausgestossen und in das entsprechende Fach des Fächerwagens eingeschoben. Die einzelnen Fächer der Fächerwagen 10 können dabei ähnlich gestaltet sein, wie die Fächer des Sortierwagens 8.

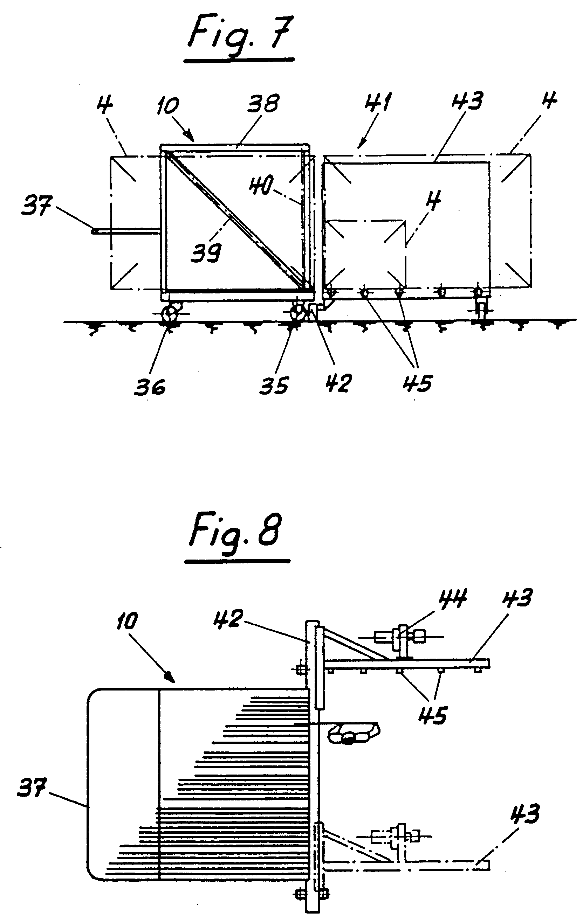

In den Figuren 7 und 8 ist ein Fächerwagen 10 in etwas grösserem Massstab und mit etwas mehr Einzelheiten dargestellt. Jeder Wagen weist feste Rollen 35 und Schwenkrollen 36 auf, sodass er von hand, beispielsweise mit Hilfe seines Griffbügels 37, verschoben werden kann. Wie erwähnt, weist jeder Fächerwagen 10 ähnlich wie der Sortierwagen 8 vertikal stehende Rahmen 38 auf, an welchem mit weichem Material, z.B. PVC, beschichtete Drähte, Seile oder Stäbe zur seitlichen Abstützung der eingeführten Glasscheiben 4 angebracht sind. An der Einschubseite des Fächerwagens sind vertikale Stangen 40 zwischen den Fächern ebenfalls mit einer weichen Beschichtung versehen. Beim Manipulieren der Glasscheiben sowohl bei der Ueberführung von der Aufstellmaschine in den Sortierwagen als auch beim Ueberführen aus dem Sortierwagen in ein Fach eines Fächerwagens 10 werden die Glasscheiben dauernd durch die sie erfassende Zange 7 gehalten und erreichen mit Sicherheit die korrekte Endposition ohne dass dabei Gefahr besteht, dass die Glasscheiben seitlich feste Anlageteile touchieren und beschädigt werden könnten.

Die Figuren 7 und 8 zeigen schematisch eine Vorrichtung 41 zum Ergänzen der Fächerwagen 10 mit Spezialgläsern. Diese Vorrichtung weist eine Führung 42 auf, an welche ein Fächerwagen 10 herangeführt werden kann. Eine Luftkissenwand 43 der oben beschriebenen Art mit einem Gebläse 44 ist längs des Gestells 42 verschiebbar und manuell genau positionierbar angeordnet. Unterhalb der Luftkissenwand 43 sind Stützrollen 45 angeordnet, auf welche Glasscheiben 4 aufgelegt und vor der Luftkissenwand 43 in der beschriebenen Weise in genauer Position gehalten werden können. Wie in Figur 8 angedeutet, können kleinere Spezialscheiben von hand in das vorgegebene Fach des Fächerwagens 10 eingeschoben werden. Grössere, schwerere Glasscheiben werden mittels der fahrbaren Luftkissenwand vorbereitet wie in Figur 7 angedeutet. Dann wird die Luftkissenwand in die vorgeschriebene, genaue Position vor dem Fächerwagen 10 gebracht und die vorbereitete Glasscheibe 4 wird manuell in das entsprechende Fach des Fächerwagens eingeschoben. Wie in verschiedenen Figuren angedeutet ist, werden die Glasscheiben immer nur um eine, ihrer Länge entsprechende Distanz in die Fächerwagen eingeschoben, bzw. in den Sortierwagen 8, eingezogen.

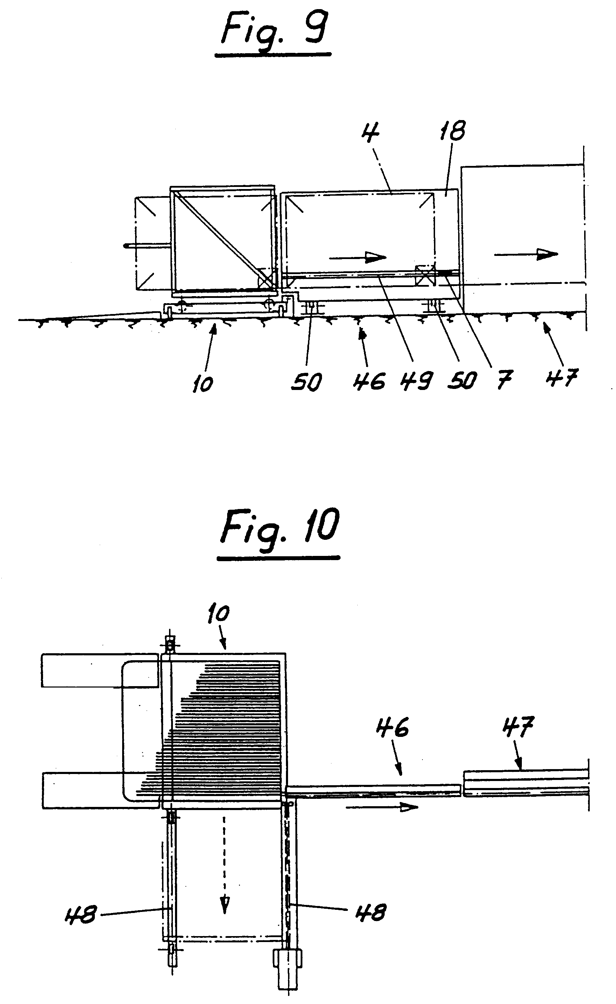

Wenn die Fächerwagen voll besetzt sind, werden sie gemäss Figuren 9 und 10 in eine genau definierte Position vor eine Uebergabevorrichtung 46 zum Ueberführen der Glasscheiben in eine Weiterbearbeitungsanlage, beispielsweise eine Isolierglaslinie 47, gebracht. Der Fächerwagen 10 ist dabei auf Führungen 48 quer zu der ortsfesten Uebernahmevorrichtung 46 verschiebbar und genau positionierbar, um in der vorprogrammierten Reihenfolge aus bestimmten Fächern Glasscheiben zu entnehmen. Die Entnahme erfolgt dabei durch eine in Figur 9 angedeutete Zange 7, welche der Zange 7 des Sortierwagens entsprechen kann, welche jedoch quer aus ihrer Bewegungsbahn 49 entfernt werden kann, um dann die aus dem Fächerwagen 10 entnommenen Glasscheiben in die Weiterbearbeitungsvorrichtung 47 übertreten zu lassen. Die Vorrichtung 46 weist ebenfalls eine Luftkissenwand 18 im Sinne der Figuren 2 - 4 auf, vor welcher die Glasscheiben auf nicht dargestellten Stützrollen in definierter Position gehalten sind. Die Luftkissenwand 18 kann um in Figur 9 angedeutete Schwenklager 50 geschwenkt werden, um eine an ihr liegende Glasscheibe 4 aus der vertikalen Position, in welcher sie aus dem Fächerwagen 10 entnommen wurde, in die, zur Uebernahme durch die Bearbeitungsvorrichtung 47 erforderliche Lage zu kippen. Diese Kippbewegung kann einige Grad bis zu 90° betragen, d.h. die Glasscheibe kann aus der vertikalen Lage in jede Zwischenlage bis zur horizontalen Lage gekippt werden.

Zur erwähnten genauen Positionierung der Fächerwagen 10 sowohl zur Uebernahme von Glasscheiben aus dem Sortierwagen 8 (Figur 1) als auch zur Entnahme von Glasscheiben gemäss Figur 9 und 10 werden die Fächerwagen vorzugsweise an Auflagern angehoben, womit nicht nur ihre genaue Position in Horizontalrichtung, sondern auch ihre vertikale Position genau bestimmt wird. Die letztgenannte Bedingung ist von Bedeutung zum problemlosen Einschieben bzw. Herausziehen der Glasplatten in die bzw. aus den Fächern der Fächerwagen ohne dass z.B. die Glasscheiben nur auf einer Ecke am Fächerboden gleiten.

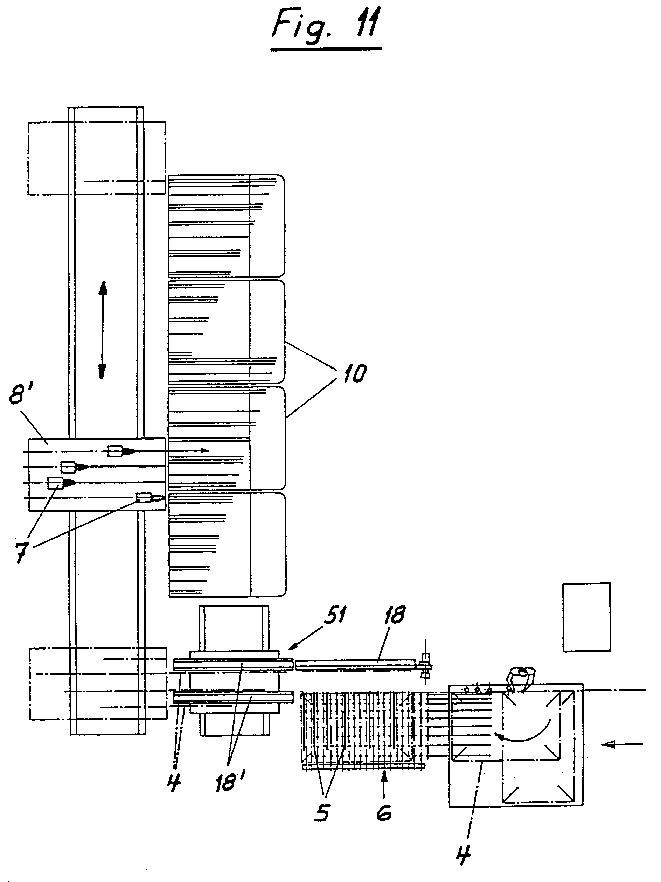

In Figur 11 ist rein schematisch eine Ausführungsvariante dargestellt, in welcher entsprechende Anlageteile gleich bezeichnet sind, wie in den übrigen Figuren. Die Aufstellmaschine 6 und die Fächerwagen 10 sind gleich ausgebildet. Der Unterschied besteht darin, dass zwischen der Aufstellmaschine 6 und dem Sortierwagen 8', welcher 4 Fächer und 4 Zangen 7 aufweist, ein Zwischenlager oder Puffer 51 vorhanden ist. Dieser Puffer 51 ist ebenfalls mit doppelseitigen Luftkissenwänden 18' ausgerüstet, an welchen bis zu 4 Glasscheiben 4 positioniert werden können. Aus diesem Puffer kann der Sortierwagen 8' je 4 Glasscheiben entnehmen und der Reihe nach in die zugeordneten Fächer der Fächerwagen 10 überführen. Mit diesem Puffer 51 bzw. Erhöhung der Fächer und Zangen im Sortierwagen, kann die Sortierkapazität erhöht werden.

## Patentansprüche

1. Anlage zum Sortieren von Plattenmaterial, insbesondere Glasscheiben (4), mit mindestens einem Fächerwagen (10) zur Aufnahme und zum Transport von Platten (4) und mit einem Sortierwagen (8) mit mehreren Fächer zum gesteuerten Zubringen von Platten in bestimmte Fächer des Fächerwagens wobei Fördermittel (7) zum Einführen von Platten in den Sortierwagen und aus demselben in den Fächerwagen (10) vorhanden sind, dadurch gekennzeichnet, dass jedem Fach des Sortierwagens (8) eine Fördervorrichtung (7) zugeordnet ist, die aus dem Sortierwagen (8) ausfahrbar ist, um sowohl zum Einbringen von Platten (4) in den Sortierwagen (8) als auch zum Überführen von Platten aus dem Sortierwagen in den Fächerwagen (10) zu wirken.

2. Anlage nach Anspruch 1, dadurch gekennzeichnet, dass die Fördervorrichtung eine verschiebbare Zange (25, 26) zur Erfassung eines Plattenrandes aufweist.

3. Anlage nach einem der Ansprüche 1 - 2, dadurch gekennzeichnet, dass der Weg der Fördervorrichtung (7) derart programmsteuerbar ist, dass Platten (4) ihrer Abmessung in Förderrichtung entsprechend gefördert werden.

4. Anlage nach einem der Ansprüche 1-3, mit einer Aufstellvorrichtung (6) zum Aufrichten der Platten (4) zur Uebernahme derselben durch die Fördervorrichtung (7), dadurch gekennzeichnet, dass Mittel (21 - 23) vorgesehen sind, um zwischen einer Wand (18) und einer gegen dieselbe aufgerichteten Platte (4) einen Luftstrom zu erzeugen, welcher die Platte in bestimmtem Abstand von der Wand (18) hält.

## Claims

1. An installation for the sorting of plate material, in particular glass plates (4), comprising at least one compartment carriage (10) for containing and transporting plates (4), and a sorting carriage (8) having several compartments for the controlled insertion of plates into determined compartments of said compartment carriage, conveyor means (7) being provided for the purpose of introducing plates into said sorting carriage and from the latter to said compartment carriage (10), characterised in that each compartment of said sorting carriage (8) has an associated conveyor device (7) which is capable of being extended in order to effect both the insertion of plates (4) into said sorting carriage (8) and the transfer of plates from said sorting carriage to said compartment carriage (10).

2. Installation according to claim 1, characterised in that said conveyor device comprises a pair of displaceable nippers (25, 26) for seizing the edge of a plate (4).

3. Installation according to one of claims 1 to 2, characterised in that the path of the conveyor device (7) is program controllable in such a manner that plates (4) are transported according to their dimensions in the transport direction.

4. Installation according to any one of claims 1 to 3, comprising a raising device (6) for the purpose of uprighting the plates (4) for their takeover by said conveyor device (7), characterised in that means (21 - 23) are provided for producing an air flow between a wall (18) and a plate (4) uprighted against said wall, said air flow holding said plate in a determined distance from said wall (18).

## Revendications

1. Installation pour le triage de matériaux en plaques, plus particulièrement de plaques de verre (4), comprenant au moins un chariot à compartiments (10) pour contenir et transporter des plaques (4), ainsi qu'un chariot de triage (8) ayant plusieurs compartiments pour l'introduction commandée de plaques dans des compartiments déterminés dudit chariot à compartiments, l'installation comprenant des moyens convoyeurs (7) pour introduire des plaques dans ledit chariot de triage, et depuis ce dernier, dans ledit chariot à compartiments (10), caractérisée en ce qu'a chaque compartiment du chariot de triage (8) est associé un dispositif convoyeur (7) capable d'être déployé du chariot de triage (8) afin d'effectuer et l'introduction de plaques (4) dans le chariot de triage (8), et le transfert de plaques du chariot de triage au chariot à compartiments (10).

2. Installation selon la revendication 1, caractérisée en ce que ledit dispositif convoyeur présente une pince (25, 26) déplaçable afin de saisir le bord d'une plaque.

3. Installation selon l'une des revendications 1 à 2, caractérisée en ce que le trajet dudit dispositif convoyeur (7) est capable d'être commandée par programme de telle manière que les plaques (4) sont transportées conformément à leurs dimensions par rapport à la direction de transport.

4. Installation selon l'une quelconque des revendications 1 à 3, comprenant un dispositif à lever (6) pour dresser les plaques (4) avant leur prise par le dispositif convoyeur (7), caractérisée en ce qu'elle présente des moyens (21 - 23) produisant un courant d'air entre une paroi (18) et une plaque (4) dressée contre cette dernière, ledit courant d'air maintenant la plaque à une certaine distance de ladite paroi (18).
